Europäisches Patentamt

European Patent Office

Office européen des brevets

(11) Veröffentlichungsnummer: **0 229 587 B1**

# EUROPÄISCHE PATENTSCHRIFT

(45) Veröffentlichungstag der Patentschrift: **15.05.91**

(51) Int. Cl.⁵: **B01D 53/14**

(21) Anmeldenummer: **86810301.1**

(22) Anmeldetag: **08.07.86**

(54) **Verfahren zum Entschwefeln von schwefelwasserstoffhaltigem Gas und Vorrichtung zur Durchführung des Verfahrens.**

(30) Priorität: **11.10.85 CH 4394/85**

(43) Veröffentlichungstag der Anmeldung:
**22.07.87 Patentblatt 87/30**

(45) Bekanntmachung des Hinweises auf die
Patenterteilung:
**15.05.91 Patentblatt 91/20**

(84) Benannte Vertragsstaaten:
**AT BE CH DE FR GB IT LI NL SE**

(56) Entgegenhaltungen:
**US-A- 4 390 516**
**US-A- 4 496 371**

(73) Patentinhaber: **UTB Umwelttechnik Buchs AG**
**Technikumstrasse 14**
**CH-9470 Buchs/SG(CH)**

(72) Erfinder: **Görlich, Lothar, Dipl.-Ing.**
**Osnabrücker Strasse 37**
**W-4503 Dissen a.T.W.(DE)**

(74) Vertreter: **Riederer, Conrad A., Dr.**
**Bahnhofstrasse 10**
**CH-7310 Bad Ragaz(CH)**

Rank Xerox (UK) Business Services

## Beschreibung

Die Erfindung betrifft ein Verfahren zum Entschwefeln von schwefelwasserstoffhaltigem Gas, z.B. von Klärgas, Biogas, Erdgas oder Kohlegas, bei welchem das Gas mit einer im Kreislauf zirkulierenden Flüssigkeit in einem Stoffaustauschraum gewaschen wird, wobei in der Flüssigkeit Schwefelverbindungen gebildet werden, die Flüssigkeit zwecks Oxidation der gebildeten Schwefelverbindungen mit Luft oder Reinsauerstoff in einem Druckbehälter unter einem Druck, der höher als der Umgebungsdruck ist, belüftet wird, um die gebildeten Schwefelverbindungen zu oxidieren und dann den dabei anfallenden Elementarschwefel aus der Flüssigkeit auszuscheiden, und die vom Schwefel befreite Flüssigkeit entgast und wieder zum Waschen des Gases verwendet wird.

Viele der heute als Energieträger verwendeten Gase enthalten in ihrem Rohzustand Schwefelverbindungen, insbesondere Schwefelwasserstoff. Dies ist auch beim sogenannten Klärgas der Fall. Klärgas, oft auch Faulgas genannt, entsteht bei der anaeroben Behandlung von Klärschlamm. Klärschlamm wird in geschlossenen Faultürmen mikrobiell in eine für die Umwelt schadlose Form umgewandelt. Bei diesem Prozess entsteht pro Kubikmeter Rohschlamm bis zu 25 Kubikmeter sogenanntes Klär- oder Faulgas, d.h. ein Methangas mit einem Heizwert von nahezu 23'000 KJ/m$^3$. Dieses Methangas eignet sich zum Betrieb von Gasmotoren in der Kraft-Wärme-Kopplung auf Kläranlagen, ebenso zur Verbrennung in Gasbrennern zur Beheizung von Faultürmen und Gebäuden oder nach vorheriger Aufbereitung zur Einspeisung in das öffentliche Gasversorgungsnetz. In jedem verfahrenstechnischen Anwendungsfall ist die Nutzung von schwefelhaltigem Gas problematisch. So entstehen z.B. bei der Verbrennung der Gase in Verbrennungsmotoren oder Gasbrennern stark korrosiv wirkende Schwefelverbindungen, wie z.B. $H_2SO_3$ oder $H_2SO_4$. Infolgedessen müssen die hierfür benötigen Apparate aus Sonderwerkstoffen gefertigt werden oder es ist mit beträchtlichen Raparatur- und Unterhaltskosten wegen Korrosionsschäden zu rechnen. Des weiteren ist die Abgabe von schwefelhaltigen Abgasen in die Atmosphäre aus Gründen des Umweltschutzes unerwünscht oder gar unzulässig.

Um diese Probleme zu vermeiden, ist es üblich, die Gase, wie z.B. das bei Kläranlagen anfallende Klärgas, in Gasentschwefelungsanlagen zu entschwefeln. Gasentschwefelungsanlagen arbeiten entweder nach dem sogenannten Trockenverfahren oder dem sogenannten Nassverfahren. Beim Trockenverfahren wird der Schwefelwasserstoff an einer festen Reinigungsmasse, z.B. Eisenhydroxid, also Fe(OH)$_3$, in FeS und $H_2O$ umgesetzt, worauf dann die Reinigungsmasse durch Oxidation wieder regeneriert werden kann. Der Schwefel wird dort mit einem Teil der Reinigungsmasse ausgetragen und auf Sondermülldeponien entsorgt. Die fehlende Reinigungsmasse muss ersetzt werden.

Beim Nassverfahren wird das zu reinigende Gas mit einer Flüssigkeit gewaschen, wobei in der Flüssigkeit durch chemische Reaktion lösliche Schwefelverbindungen gebildet werden. Hierauf wird die Flüssigkeit zwecks Oxidation der Schwefelverbindungen mit Luft oder Reinsauerstoff belüftet. Dabei wird, je nach den verwendeten Chemikalien in der Waschlösung, z.B. Gips (CaSO$_4$), Ammoniumsulfat ((NH$_4$)2SO$_4$) gebildet oder der Schwefel wird in nahezu chemisch reinem Zustand ausgeschieden. Darauf kann die vom Schwefel befreite Flüssigkeit wieder als Waschflüssigkeit für das zu reinigende Gas verwendet werden. Die Waschflüssigkeit enthält in der Regel Zusatzstoffe, die katalytisch die gezielte Abtrennung des Schwefels oder dessen chemischen Verbindungen ermöglichen.

Ein bereits bekanntes Nassverfahren ist das sogenannte Takahax-Verfahren. Bei diesem Verfahren erfolgt die Entfernung des Schwefelwasserstoffs aus dem Rohgas in einem senkrechten Behälter durch Versprühen einer alkalischen Flüssigkeit vom oberen Ende des Behälters, durch welchen das Gas im Gegenstrom zu den fallenden Tropfen strömt. Die nachfolgende Oxidation der Schwefelverbindungen erfolgt in hohen stehenden zylindrischen Behältern. Diese Behälter sind oben offen und mit der aus der Waschstufe anfallenden mehr oder weniger gesättigten Flüssgikeit gefüllt. In diese Flüssigkeit wird durch am Boden des Behälters angeordnete gelochte Rohre grobblasig Druckluft eingeblasen. Die Oxidation erfolgt während des Aufstiegs der Luftblasen zum Flüssigkeitsspiegel. Die Reaktionsgeschwindigkeit der Oxidation ist bekanntermassen ausser von dem katalysatorspezifischen Energiepotential und der Temperatur unter anderem auch wesentlich abhängig von der Grösse der Kontaktflächen zwischen den Luftblasen und der Flüssigkeit. Bei der Oxidation wird Elementarschwefel frei, der zum Teil in Form von Schaum in einem Luftabscheider oberhalb des Oxidationsbehälters auftritt und dort durch eine Abzugseinrichtung abgezogen wird. Der Schwefel wird dann in einem Filter ausgefiltert, wobei die dabei anfallende Flüssigkeit zusammen mit der übrigen regenerierten Flüssigkeit wieder der Waschstufe zugeführt werden kann. (Hasebe, Das Takahax-Verfahren zur nassen Gasentschwefelung, in gwf, Das Gas- und Wasserfach, 107. Jahrgang, S. 161-167).

Der grosse Nachteil des Takahax-Verfahrens besteht im grossen apparativen Aufwand und den hohen Investitions- und Energiekosten. So wurde beispielsweise noch 1978 eine Takahax-Anlage für eine Abwasserreinigungsanlage in der Nähe von Tokyo gebaut, welche den Schwefelwasserstoffgehalt in 150 m³/h Klärgas von 0,5 vol % auf etwa 0,05 vol % reduziert. Diese Anlage benötigt einen Waschturm von 1,7 m Durchmesser und 13 m Höhe, sowie einen Oxidationsturm von 1,3 m Durchmesser und 9 m Höhe. Das Volumen der Anlage beträgt daher rund 42 m³, wobei für die Erstfüllung des Systems ungefähr 15 m³ Waschflüssigkeit notwendig sind.

Beim Takahax-Verfahren wird als Waschflüssigkeit eine alkalische Lösung, normalerweise in Verbindung mit 1,4-Naphthochinon-2-sulfonsaures Natrium als Katalysator, verwendet.

Die US-A-4 496 371 beschreibt ein Verfahren zum Entfernen von Schwefelwasserstoff und Kohlendioxid aus einem Gasstrom. Bei diesem Verfahren wird das zu behandelnde Gas durch zwei in Serie geschaltete Absorptionskolonnen geführt und im Gegenstrom mit einer Kaliumkarbonatlösung gewaschen. Die nach der Waschung sulfidreiche Waschflüssigkeit aus der ersten Absorptionskolonne wird über einen Reaktor einer Oxidationskolonne zugeführt. Die Waschflüssigkeit aus der zweiten Absorptionskolonne wird direkt der Oxidationskolonne zugeführt. Aus der Oxidationskolonne gelangt dann die Waschflüssigkeit zuerst in eine Phaseseparationszone, wo Stickstoff, Kohlendioxid und flüssiger Schwefel abgeschieden werden. In einer Abscheiderkolonne wird dann die Waschflüssigkeit vom verbleibenden Kohlendioxid befreit. Die so gereinigte Waschflüssigkeit wird dann zu den beiden Absorptionskolonnen zurückgeführt, so dass der Kreislauf der Waschflüssigkeit geschlossen ist. Das beschriebene Verfahren hat den Nachteil, dass es hohe Temperaturen und Drücke und einen grossen apparativen Aufwand erfordert.

Es ist Aufgabe der vorliegenden Erfindung, ein Verfahren zum Entschwefeln von schwefelwasserstoffhaltigem Gas zu schaffen, das sich mit kleinem apparativem Aufwand und relativ geringem Platzbedarf verwirklichen lässt.

Die Erfindung sieht ein Verfahren zum Entschwefeln von schwefelwasserstoffhaltigem Gas vor, bei welchem das Gas in einer im Kreislauf zirkulierenden Flüssigkeit gewaschen wird, wobei in der Flüssigkeit Schwefelverbindungen gebildet werden, die Flüssigkeit zwecks Oxidation der gebildeten Schwefelverbindungen mit Luft oder Reinsauerstoff belüftet wird, um die gebildeten Schwefelverbindungen zu oxidieren und dann den dabei angefallenen Elementarschwefel aus der Flüssigkeit auszuscheiden, und die vom Schwefel befreite Flüssigkeit wieder zum Waschen des Gases verwendet wird. Das erfindungsgemässe Verfahren ist dadurch gekennzeichnet, dass die regenerierte Flüssigkeit mit einer ersten Pumpe von einem Speicherbehälter zum Stoffaustauschraum und zurück in den Speicherbehälter zirkuliert wird, dass die zu regenerierende Flüssigkeit mit einer zweiten Pumpe vom Speicherbehälter zu einem Oxidationsbehälter gefördert und nach der Entgasung zurück zum Speicherbehälter zirkuliert wird, und dass zur Belüftung die Flüssigkeit im Oxidationsbehälter mit einer dritten Pumpe ständig umgepumpt wird. Diese Ausgestaltung des Verfahrens ermöglicht den Bau einer sehr kompakten Anlage zur Durchführung des Verfahrens. Allgemein benötigt ein Verfahren, das unter Ueberdruck arbeitet, einen höheren apparativen Aufwand.

Beim vorliegenden Verfahren kann der Druck bei der Belüftung bei etwa zwei bar gehalten werden. Ein Druck in dieser Grössenordnung erfordert einen geringen apparativen Aufwand und bringt sehr gute Resultate. Weil die im Druckbehälter befindliche Flüssigkeit ständig umgewälzt wird, wird die Geschwindigkeit, mit der der Sauerstoff in der Flüssigkeit gelöst wird, erhöht und die Oxidation beschleunigt. Vorteilhaft wird beim Umwälzen die Flüssigkeit im Raum über dem Flüssigkeitsspiegel im Druckbehälter zersprüht. Dabei ist es vorteilhaft, wenn die Belüftung in einem liegenden zylindrischen Druckbehälter vorgenommen wird, der praktisch bis zur Hälfte mit Flüssigkeit gefüllt ist. Auf diese Weise wird die Diffusionsfläche zusätzlich erhöht. Dies trägt ebenfalls zu einer schnellen Oxidation bzw. einer schnellen Ausscheidung von elementarem Schwefel bei.

Dem Kreislauf kann ständig ein Teil der Flüssigkeit entzogen und zur Ausfilterung des Schwefels einer Filtervorrichtung zugeleitet und dann dem Kreislauf wieder zugeführt werden. Auf diese Weise wird eine stetige Abscheidung des ausgefällten Schwefels erreicht.

Zweckmässigerweise wird die im Kreislauf pro Zeiteinheit entzogene Flüssigkeitsmenge in Abhängigkeit der pro Zeiteinheit geförderten Gasmenge geregelt. Dies ermöglicht eine Energieeinsparung, da weniger Pumpenergie notwendig ist.

Die Erfindung betrifft auch eine Vorrichtung zur Durchführung des Verfahrens gemäss Anspruch 7. Diese Vorrichtung ist einfach im Aufbau und kann in bezug auf bekannte Vorrichtungen wesentlich kleiner dimensioniert werden. Dadurch kommt es zu einer erheblichen Kostenersparnis. Auch im Betrieb der Vorrichtung können Ersparnisse erzielt werden, da der Energiebedarf im Vergleich zu bekannten Anlagen, welche ein grosses Flüssigkeitsvolumen benötigen, relativ klein ist.

Die Entgasungsvorrichtung kann mindestens eine Entspannungskolonne aufweisen, welche unten an den Oxidationsbehälter angeschlossen ist und oben einen Auslauf aufweist, über welchen die regenerierte Flüssigkeit direkt oder über den Speicherbehälter zum Stoffaustauschraum fliessen kann. Im Entspannungsbehälter wird in der Flüssigkeit gelöstes Gas ausgeschieden. Durch die Flotationswirkung werden schwebende Schwefelteilchen nach oben geführt und können von dort als Schwefelschaum abgeführt werden. Vorteilhaft ist daher eine Absaugleitung für Schwefelschaum von der Entspannungskolonne zum Oxidationsbehälter oder einer Filtereinrichtung vorgesehen. Wenn der Schwefelschaum zum Oxidationsbehälter geführt wird, kann die gleiche Pumpe, welche Flüssigkeit vom Stoffaustauschraum zum Oxidationsbehälter pumpt, auch als Absaugorgan dienen. Dabei ist vorteilhaft, dass der im Schwefelschaum enthaltene Reinsauerstoff bzw. die Luft wieder zum Oxidationsbehälter zurückgeführt wird und somit erneut für die Oxidation zur Verfügung steht.

Der Speicherbehälter ist vorteilhaft durch eine von oben bis in Bodennähe reichende Trennwand in zwei Kammern aufgeteilt, wobei die erste Kammer einen Einlass für Flüssigkeit aus dem Stoffaustauschraum aufweist und die zweite Kammer mit dem Auslauf der Entspannungskolonne verbunden ist und sowohl einen Auslass zum Stoffaustauschraum als auch einen Auslass zum Oxidationsbehälter aufweist. Die erste Kammer enthält daher in erster Linie verbrauchte Waschflüssigkeit und die zweite Kammer regenerierte Flüssigkeit. Der Auslass zum Stoffaustauschraum ist vorteilhaft unten an der zweiten Kammer angeordnet. Der Auslass zum Oxidationsbehälter hingegen ist vorteilhaft in einem Abstand vom Auslass für den Stoffaustauschraum über diesem angeordnet. Der Auslass für Flüssigkeit aus dem Stoffaustauschraum wird vorteilhaft durch einen Ueberlauf gebildet, z.B durch einen Trichter. Ueber diesen Ueberlauf wird dann auch auf der Oberfläche schwimmender Schwefelschaum abgezogen.

Vorteilhaft führt vom Auslauf der Entspannungskolonne ein Auslaufrohr in eine weitere Kammer in die Nähe des Auslasses zum Stoffaustauschraum. Dadurch kann sichergestellt werden, dass möglichst nur regenerierte Flüssigkeit als Waschflüssigkeit verwendet wird. Der obere Teil der zweiten Kammer ist z.B. über eine Oeffnung im Auslaufrohr mit der Atmosphäre verbunden. Dadurch wird sichergestellt, dass nie ein Ueberdruck in der zweiten Kammer entstehen kann, welches auch immer die Ursachen eines solchen Ueberdrucks sein mögen. Es ist möglich, eine Mehrzahl von Stoffaustauschräumen und/oder eine Mehrzahl von Entspannungskolonnen vorzusehen, wobei dann eine Steuereinrichtung, Ventile und Klappen vorgesehen sind, um entsprechend der pro Zeiteinheit zu reinigenden Gasmenge Stoffaustauschräume und/oder Entspannungskolonnen zu- oder abzuschalten. Dies ermöglicht eine einfache Anpassung der Anlage an veränderte Gasproduktion.

Zweckmässigerweise sind im Oxidationsbehälter Düsen zum Verteilen der Flüssigkeit angeordnet. Vorteilhaft sind auch Niveaufühler zur Regelung des Flüssigkeitsspiegels im Speicherbehälter und/oder im Oxidationsbehälter vorgesehen. Dadurch wird versichert, dass die Flüssigkeitsspiegel immer den für die Durchführung der Verfahrens optimalen Stand aufweisen. Zweckmässigerweise ist ein Steuerventil zur Steuerung der pro Zeiteinheit zum Filter fliessenden Flüssigkeitsmenge vorgesehen. Dies ermöglicht eine zweckmässige Durchführung des Verfahrens.

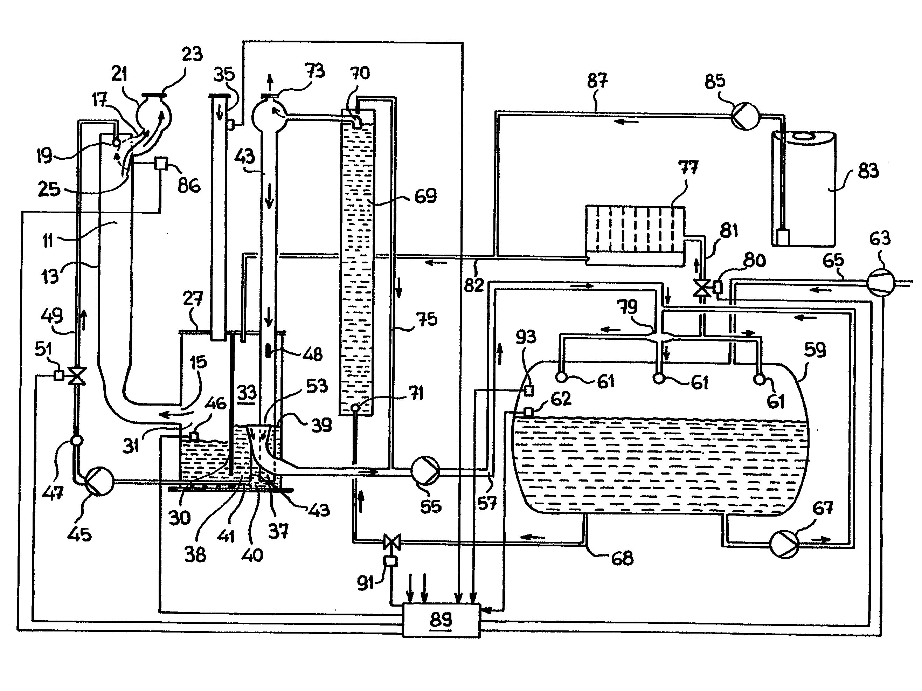

Ein Ausführungsbeispiel der Erfindung wird nun unter Bezugnahme auf die Zeichnung beschrieben.

Die Anlage zur Entschwefelung besitzt mindestens einen Stoffaustauschraum 11, der beim gezeigten Ausführungsbeispiel durch eine senkrecht angeordnete Kolonne 13 gebildet wird.

Der Stoffaustauschraum 11 besitzt unten einen Gaseinlass 15 und oben einen Gasauslass 17. Oben an der Kolonne 13 sind Mittel 19 zum Verteilen einer Flüssigkeit vorgesehen, z.B. eine Sprühdüse oder ein motorangetriebener Propeller, auf den ein Flüssigkeitsstrahl gerichtet wird. Es kann eine Vielzahl von Kolonnen 13 vorgesehen werden, deren Auslässe 17 über ein Rohr 21 miteinander verbunden sind und zu einem gemeinsamen Reingasauslass 23 führen. Für jede Kolonne 13 ist dann eine Klappe 25 vorgesehen, mit welcher die Kolonne 13 ein- oder ausgeschaltet werden kann.

Ein geschlossener Speicherbehälter 27 dient der Speicherung der zum Waschen verwendeten Flüssigkeit. Im Speicherbehälter 27 ist eine von oben bis in Bodennähe reichende Trennwand 30 angeordnet, welche den Speicherbehälter 27 in zwei Kammer 31 und 33 aufteilt. Die beiden Kammer 31, 33 wirken dabei als kommunizierende Gefässe für die darin enthaltene Flüssigkeit. Diese Anordnung wurde gewählte, um die unter gegebenenfalls schwankendem Gasdruck stehende Kammer 31 von der unter atmosphärischem Druck stehende Kammer 33 zu trennen. Gleichzeitig wird sichergestellt, dass die aus dem Stoffaustauschraum 11 in die Kammer 31 austretende Flüssigkeit ungehindert weiter in die Kammer 33 fliessen kann.

Es ist zu beachten, dass das zu reinigende Gas über die Leitung 35 in die Kammer 31 und von dort in den Stoffaustauschraum 11 fliesst.

Die Kammer 33 ist durch eine weiteren Trennwand 37 in zwei Abteile 38, 40 unterteilt. Die Trennwand 37 ist aber nur so hoch, dass sie vom Boden der Kammer 33 bis in die Nähe des Flüssigkeitsspiegels 39 reicht. Der Auslass 41, durch welchen Flüssigkeit aus dem Abteil 40 zum Stoffaustauschraum 11 fliesst, ist unten in der Kammer 33 an der zweiten Trennwand 37 angeordnet und zwar ganz in der Nähe des Endes des Auslaufrohrs 43, durch welches regenerierte Flüssigkeit in den Speicherbehälter 27 fliesst. Dadurch wird sichergestellt, dass praktisch nur regenerierte Flüssigkeit von der Pumpe 45 in den Stoffaustauschraum 11 gefördert wird. Der Flüssigkeitsstand in der Kammer 31 wird durch den Niveaufühler 46 kontrolliert, der an die Steuereinrichtung 89 angeschlossen ist. Die zweite Kammer 33 ist über eine Oeffnung 48 im Auslaufrohr 43 mit Atmosphäre verbunden. Dadurch wird sichergestellt, dass in der zweiten Kammer 33 kein Ueberdruck entstehen kann.

Wenn mehrere Kolonnen 13 vorhanden sind, kann eine Querverbindungsleitung 47 vorgesehen sein, welche jede Leitung 49 mit Flüssigkeit versorgt. Ventile 51 dienen dem Ein- oder Abschalten der Kolonnen 13.

Der Auslass 53 aus dem Speicherbehälter 27 für die zu regenerierende Flüssigkeit ist in einem Abstand vom Auslass 41 angeordnet und als Ueberlauf aus der Kammer 33 ausgebildet. Dieser Ueberlauf 53 kann beispielsweise die Form eines Trichters besitzen. Ueber diesen Ueberlauf 53 wird dann nicht nur Flüssigkeit aus der Kammer 33 abgeleitet sondern auch der auf der Oberfläche schwimmende Schwefelschaum. Eine Pumpe 55 pumpt die in den Ueberlauf 53 fliessende Flüssigkeit durch die Leitung 57 in den Oxidationsbehälter 59, wo mindestens eine Verteilvorrichtung 61 vorgesehen ist, um die Flüssigkeit fein zu versprühen. Beim gezeigten Ausführungsbeispiel sind zur Verteilung der Flüssigkeit drei Düsen 61 vorgesehen.

Der Oxidationsbehälter 59 ist als Druckbehälter ausgebildet. Er hat vorzugsweise eine zylindrische Form und ist liegend angeordnet. Die Füllung ist derart, dass der Flüssigkeitsspiegel ungefähr in der waagrechten Behälterachse liegt und somit seine grösste Oberfläche besitzt. Dies wird durch den Niveaufühler 62 kontrolliert. Das Behältervolumen über dem Flüssigkeitsspiegel wird mit Luft oder reinem Sauerstoff konstant unter Ueberdruck, vorzugsweise etwa 2 bar, gehalten. Zu diesem Zweck ist ein Gasverdichter 63 vorgesehen, der Luft oder gasförmigen Reinsauerstoff über die Leitung 65 in den Druckbehälter 59 pumpt. Die im Behälter befindliche Flüssigkeit wird mittels der Pumpe 67 ständig abgepumpt und über die Düsen 61 wieder in den Druckbehälter eingeführt. Dadurch wird ein häufiger Kontakt der Flüssigkeit mit dem Oxidationsmedium, also der Luft oder dem Sauerstoff, erreicht.

Die Lösung eines Gases in einer Flüssigkeit ist ein rein physikalischer Vorgang. Bei diesem treffen die Gasmoleküle entsprechend ihrer erhöhten Teilchenzahl pro Volumeneinheit im Ueberdruckraum des Behälters 59 und ihrer Molekularbewegung (d.h. ihrer Temperatur) mehr oder weniger häufig in Berührung mit der Oberfläche der versprühten Flüssigkeit. Von der Oberfläche wandern die Gasmoleküle in die Zwischenräume des Molekül-Strukturgitters der Flüssigkeit und füllen diese Zwischenräume auf. Da die chemische Reaktionszeit der Oxidation der Schwefelverbindungen eine Funktion der möglichen Sauerstoffdiffusionstiefe pro Zeiteinheit ist, wird die Reaktionszeit sowohl durch den Druck als auch durch die Vergrösserung der Kontaktflächen im besonderen zwischen der Flüssigkeit und dem Gas erheblich beschleunigt. Durch das Versprühen der Flüssigkeit wird eine starke Vergrösserung der Kontaktflächen erreicht.

Zur Rückführung regenerierter Flüssigkeit aus dem Oxidationsbehälter 59 in den Sprühraum 11 dient die Leitung 68, welche zu einer Entgasungsvorrichtung 69 führt, von welcher dann die entgaste Flüssigkeit über das Rohr 43 in den Speicherbehälter 27 und von dort in den Stoffaustauschraum 11 gelangt.

Beim gezeigten Ausführungsbeispiel ist die Entgasungsvorrichtung 69 als Entspannungskolonne ausgebildet, welche unten einen z.B. kugelförmigen Düsenkopf 71 mit einer Vielzahl von Düsen aufweist. Oben besitzt die Entspannungskolonne 69 einen Auslauf 70 in das Rohr 43, das oben offen ist, damit auch das ausgeschiedene Gas, soweit es nicht mit dem Schaum über die Leitung 75 abgezogen wurde, durch die Oeffnung 73 entweichen kann. Die Oeffnung 73 in Verbindung mit der Oeffnung 48 im Auslassrohr 43 dient zugleich als Sicherheitsauslass für die Kammer 33 und zum atmosphärischen Druckausgleich für mögliche Spiegelschwankungen der Kammern 31 und 33. Dies ist insbesondere dann notwendig, wenn der Gasdruck in der Kammer 31 schwankt. Der sich oben in der Entspannungskolonne 69 bildende Schwefelschaum wird mit dem Ueberschussgas über die Leitung 75 abgesogen und von der Pumpe 55 dem Druckbehälter 59 zugeführt. Er könnte aber auch zur Entwässerung direkt einer Filtereinrichtung 77 zugeführt werden.

Von der Leitung 79, die zu den Düsen 61 führt, zweigt eine Leitung 81 über ein Ventil 80 zur Filtriervorrichtung 77 ab. Dort wird der in der Flüssigkeit ausgefällte Schwefel ausgefiltert. Die filtrierte Flüssigkeit strömt dann über die Leitung 82 in den Speicherbehälter 27. Als Filtriervorrichtung 77 kann beispielsweise eine Filterpresse, ein Vakuumfilter oder ein Filterbeutel dienen. Das Ventil 80 kann entsprechend dem vom Durchflussmesser 86 gemessenen Gasdurchsatz gesteuert werden.

Der unvermeidbare Verlust an Chemikalien und Katalysator bei der Filterung der Flüssigkeit in Form von Feuchtigkeit des Filterkuchens, durch Undichtigkeiten oder durch Verdampfung im Kreislauf wird automatisch durch eine Dosierstation 83 ersetzt. Die Pumpe 85 führt die Chemikalien über die Leitung 87 in die Leitung 82 ein. Eine Steuer- und Ueberwachungseinrichtung 89 dient dem automatischen Betrieb der Anlage. Die Steuereinrichtung enthält beispielsweise Angaben über die pro Zeitenheit der Anlage zugeführten Gasmenge und schaltet dementsprechend durch Betätigung der Ventile 51, 91 und der Klappen 25, Kolonnen 13 und Entspannungskolonnen 69 ein oder ab. Ein Druckfühler 93 kann im Druckbehälter 59 vorgesehen sein, um der Steuereinrichtung 89 Druckwerte zuzuführen, damit diese den Gasverdichter 63 steuert. Des weiteren werden die Flüssigkeitsspiegel im Speicherbehälter 27 durch den Niveaufühler 46 und im Behälter 59 durch den Niveaufühler 62 gemessen und geregelt.

Die Entschwefelungsanlage kann sehr kompakt gebaut werden. So wurde eine Anlage gebaut, welche die gleiche Leistung wie die eingangs erwähnte japanische Anlage besitzt, aber ein wesentliche kleineres Anlagevolumen von nur ca. 5,5 m³ besitzt. Die Erstfüllung des Systems erfolgte mit ca. 2 m³ Flüssigkeit. Da die Gesamtanlage lediglich 3,5 m lang und 2,4 m breit und 3,3 m hoch ist, kann sie werkstattmontiert und ohne Probleme verkehrsgerecht mit einem Strassenfahrzeut transportiert werden. Dies ist mit Anlagen bis zu einer Leistung von etwa 220 m³/h Rohgas möglich.

Die Anlage arbeitet wie folgt. Das Rohgas fliesst über die Leitung 35 in die Kammer 31 und von dort im Stoffaustauschraum 11 nach oben. Gleichzeitig führt die Pumpe 45 der Sprüheinrichtung 19 Waschflüssigkeit zu, so dass im Stoffaustauschraum 11 ein Sprühregen nach unten fällt. Gas und Flüssigkeit bewegen sich also im Stoffaustauschraum 11 im Gegenstrom, wobei durch die Flüssigkeitstropfen dem Gas der Schwefelwasserstoff entzogen wird. Die Flüssigkeit sammelt sich in der Kammer 31 an. Sie enthält nun eine der chemischen Reaktion entsprechende lösliche Schwefelverbindung. Von der Kammer 31 fliesst die Flüssigkeit in die Kammer 33 und von dort über den Ueberlauf 53, die Pumpe 55 und die Leitung 57 zu den Düsen 61 im Druckbehälter 59. Unter dem Einfluss der dort vorhandenen sauerstoffhaltigen Atmosphäre wird die in der Flüssigkeit enthaltene Schwefelverbindung oxidiert, wobei Elementarschwefel anfällt. Da die Flüssigkeit im Druckbehälter 59 durch die Pumpe 67 ständig umgepumpt wird, wird die Flüssigkeit gut durchlüftet. Des weiteren wird ein mit dem Ventil 80 einstellbarer Teilstrom der Flüssigkeit über die Leitung 81 der Filtriereinrichtung 77 zugeführt, welche den ausgefällten Schwefel abscheidet. Die filtrierte Flüssigkeit fliesst dann über die Leitung 82 in die Kammer 33 zurück. Weitgehend oxidierte Flüssigkeit fliesst über die Leitung 68 in die Entspannungskolonne 69. Bei der Entspannung entstehen eine Grosszahl von sehr feinen Blasen (der Durchmesser beträgt etwa 150 μm), die in der Kolonne nach oben steigen und feine Schwefelteilchen mit sich an die Oberfläche tragen. Da die Füssigkeit in der Entspannungskolonne zumindest im unteren Teil immer noch stark sauerstoffhaltig ist, geht die Aufoxidation auch in der Entspannungskolonne mit relativ grosser Intensität weiter. Diese Intensität der Oxidation ist immer noch grösser als im Oxidationsbehälter bekannter Anlagen, denn die Flüssigkeit in der Entspannungskolonne ist immer noch mehr mit Sauerstoff gesättigt als in den Oxidationbehältern der vorbekannten Anlagen, wo durch die dort verwendeten grossblasigen Belüftungsmethoden keine grosse Sättigung der Flüssigkeit mit Sauerstoff erreicht werden kann.

Der in der Entspannungskolonne 69 anfallende Schwefelschaum wird über die Leitung 75 und die Pumpe 55 abgesogen. Die Verfahrensverluste an Chemikalien und Katalysator werden durch die Dosierstation 83 ausgeglichen, indem Chemikalien und Katalysator mit der Pumpe 85 über die Leitung 87 und die Leitung 82 dem Speicherbehälter 27 zugeführt werden. Die Steuerung der Anlage erfolgt durch die Steuereinrichtung 89, welche je nach Bedarf, d.h. je nach der zugeführten Gasmenge Ventile 51 und 91 und Klappen 25 betätigt, um Stoffaustauschkolonnen 13 und/oder Entspannungskolonnen 69 zu-und abzuschalten.

## Ansprüche

1. Verfahren zum Entschwefeln von schwefelwasserstoffhaltigem Gas, z.B. von Klärgas, Biogas, Erdgas oder Kohlegas, bei welchem das Gas mit einer im Kreislauf zirkulierenden Flüssigkeit in einem Stoffaustauschraum gewaschen wird, wobei in der Flüssigkeit Schwefelverbindungen gebildet werden, die Flüssigkeit zwecks Oxidation der gebildeten Schwefelverbindungen mit Luft oder Reinsauerstoff in einem Druckbehälter unter einem Druck, der höher als der Umgebungsdruck ist, belüftet wird, um die gebildeten Schwefelverbindungen zu oxidieren und dann den dabei anfallenden Elementarschwefel aus der Flüssigkeit auszuscheiden, und die vom Schwefel befreite Flüssigkeit entgast und wieder zum Waschen des Gases verwendet wird, dadurch gekennzeichnet, dass die regenerierte Flüssigkeit mit einer ersten Pumpe (45) von einem Speicherbehälter (27) zum Stoffaustauschraum (11) und zurück in den Speicherbehälter zirkuliert wird, dass die zu regenerierende Flüssigkeit mit einer zweiten Pumpe (55) vom Speicherbehälter (27) zu einem Oxidationsbehälter (59) gefördert und nach der Entgasung zurück zum Speicherbehälter (27) zirkuliert wird, und dass zur Belüftung die Flüssigkeit im Oxidationsbehälter (59) mit einer dritten Pumpe (67) ständig umgepumpt wird.

2. Verfahren nach Anspruch 1, dadurch gekennzeichnet, dass der Druck bei der Belüftung der Flüssigkeit etwa 2 bar ist.

3. Verfahren nach Anspruch 1 oder 2, dadurch gekennzeichnet, dass bei der Förderung die Flüssigkeit im Raum über dem Flüssigkeitsspiegel im Oxidationsbehälter (59) versprüht wird.

4. Verfahren nach einem der Ansprüche 1 bis 3, dadurch gekennzeichnet, dass die Belüftung in einem liegenden zylindrischen Oxidationsbehälter (59) vorgenommen wird, der praktisch bis zur Hälfte mit Flüssigkeit gefüllt ist.

5. Verfahren nach einem der Ansprüche 1 bis 4, dadurch gekennzeichnet, dass dem Kreislauf ständig ein Teil der Flüssigkeit entzogen und zur Ausfiltrierung des Schwefels einer Filtriereinrichtung (77) zugeleitet und dann dem Kreislauf wieder zugeführt wird.

6. Verfahren nach Anspruch 5, dadurch gekennzeichnet, dass die dem Kreislauf pro Zeiteinheit entzogene Flüssigkeitsmenge in Abhängigkeit der pro Zeiteinheit geförderten Gasmenge geregelt wird.

7. Vorrichtung zur Durchführung des Verfahrens nach einem der Ansprüche 1 bis 6, mit mindestens einem Stoffaustauschraum (11) mit einem Gaseinlass (15) und einem Gasauslass (17), einer ersten Pumpe (45) und einer Sprühvorrichtung (19) zum Verteilen der Flüssigkeit im Stoffaustauschraum (11), einem Speicherbehälter (27), einem Oxidationsbehälter (59), einer zweiten Pumpe (55) zum Fördern von zu regenerierender Flüssigkeit vom Speicherbehälter (27) zum Oxidationsbehälter (59), einem Gasverdichter (63) zum Einbringen von Luft oder Reinsauerstoff in den Oxidationsbehälter (59) und zur Aufrechterhaltung eines vorbestimmten Drucks in demselben, einer dritten Pumpe zum Umpumpen der Flüssigkeit im Oxidationsbehälter (59), einer Filtervorrichtung (77) zum Entfernen des Schwefels aus dem Oxidationsbehälter, einer Leitung (68) zum Rückführen von Flüssigkeit aus dem Oxidationsbehälter (59) in den Stoffaustauschraum und einer Entspannungsvorrichtung (69) zum Entspannen der Flüssigkeit vor deren Rückführung in den Stoffaustauschraum (11).

8. Vorrichtung nach Anspruch 7, dadurch gekennzeichnet, dass die Entspannungsvorrichtung (69) mindestens eine Entspannungskolonne aufweist, welche unten an den Oxidationsbehälter (59) angeschlossen ist und oben einen Auslauf (70) aufweist, über welchen die regenerierte Flüssigkeit direkt oder über den Speicherbehälter (27) zum Stoffaustauschraum (11) fliessen kann.

9. Vorrichtung nach Anspruch 8, dadurch gekennzeichnet, dass eine Absaugleitung (75) für Schwefelschaum von der Entspannungskolonne zum Oxidationsbehälter (59) oder zur Filtriereinrichtung (77) führt.

10. Vorrichtung nach einem der Ansprüche 7 bis 9, dadurch gekennzeichnet, dass der Speicherbehälter (27) durch eine von bis in Bodennähe reichende Trennwand (30) in zwei Kammern (31, 33) aufgeteilt wird, und dass die erste Kammer (31) einen Einlass (15) für Flüssigkeit aus dem Stoffaustauschraum (11) aufweist und dass die zweite Kammer (33) mit dem Auslauf (70) der Entspannungskolonne (69) verbunden ist und sowohl einen Auslass (41) zum Stoffaustauschraum (11) als auch einen Auslass (53) zum Oxidationsbehälter (59) aufweist.

11. Vorrichtung nach Anspruch 10, dadurch gekennzeichnet, dass der Auslass (41) zum Stoffaustauschraum (11) unten an der zweiten Kammer (33) angeordnet ist.

12. Vorrichtung nach Anspruch 10 oder 11, dadurch gekennzeichnet, dass der Auslass (53) zum Oxidationsbehälter (59) in einem Abstand vom Auslass (41) zum Stoffaustauschraum (11) und über diesem Auslass (41) angeordnet ist.

13. Vorrichtung nach Anspruch 12, dadurch gekennzeichnet, dass der Auslass (53) zum Oxidationsbehälter durch einen Ueberlauf gebildet wird.

14. Vorrichtung nach einem der Ansprüche 8 bis 13, dadurch gekennzeichnet, dass vom Auslauf (70) der Entspannungskolonne (69) ein Auslaufrohr (43) in die Nähe des Auslasses (41) zum Stoffaustauschraum (11) führt.

15. Vorrichtung nach einem der Ansprüche 10 bis 14, dadurch gekennzeichnet, dass der obere Teil der zweiten Kammer (33) z.B. über eine Oeffnung (48) im Auslaufrohr (43) mit der Atmosphäre verbunden ist.

16. Vorrichtung nach einem der Ansprüche 7 bis 15, mit einer Mehrzahl von Stoffaustauschräumen (11) und/oder einer Mehrzahl von Entspannungskolonnen (69), dadurch gekennzeichnet, dass eine Steuereinrichtung (89), Ventile (51, 91) und Klappen (25) vorgesehen sind, um entsprechend der pro Zeiteinheit zu reinigenden Gasmenge Stoffaustauschräume (11) und/oder Entspannungskolonnen (69) zu- oder abzuschalten.

17. Vorrichtung nach einem der Ansprüche 7 bis 16, dadurch gekennzeichnet, dass im Oxidationsbehälter (59) Düsen (61) zum Verteilen der Flüssigkeit angeordnet sind.

18. Vorrichtung nach einem der Ansprüche 7 bis 17, dadurch gekennzeichnet, dass Niveaufühler (46, 62) zum Regeln des Flüssigkeitsspiegels im Speicherbehälter (27) und/oder im Oxidationsbehälter (59) vorgesehen sind.

19. Vorrichtung nach einem der Ansprüche 7 bis 18, dadurch gekennzeichnet, dass ein Steuerventil (80) zur Steuerung der pro Zeiteinheit zum Filter (77) fliessenden Flüssigkeitsmenge vorgesehen ist.

**Claims**

1. Method of desulfurisation of hydrogen sulfide-containing gases, e.g. of sewage sludge gas, bio-generated gas, natural gas or coal gas, utilising the steps of washing the gas in a reactor chamber with a liquid circulating in a circulation loop forming sulfur compounds in the liquid, aerating the liquid with air or oxygen in a pressure vessel under pressure higher than environmental pressure to oxydise the previously formed sulfur compounds and to remove the thereby obtained elementary sulfur from the liquid, and degassing and reusing the liquid freed from sulfur for washing the gas, characterised in that the regenerated liquid is circulated by a first pump (45) from a storage vessel (27) to the reactor chamber (11) and back to the storage vessel, in that the liquid to be regenerated is fed by a second pump (55) from the storage vessel (27) to an oxydation vessel (59) and after degassing circulated back to the storage vessel (27), and in that for aerating the liquid is continuously recirculated by a third pump (67) in the oxydation vessel.

2. Method according to claim 1, characterised in that the pressure during aeration of the liquid is about 2 bar.

3. Method according to claim 1 or 2, characterised in that on feeding the liquid is sprayed in the space above the level of liquid in the oxydation vessel (59).

4. Method according to one of the claims 1 to 3, characterised in that the aeration is arranged in an horizontally arranged cylindric oxydation vessel (59), which is filled practically halfway with liquid.

5. Method according to one of the claims 1 to 4 characterised in that a portion of the liquid is continuously withdrawn from the circulation loop and is delivered to a filtering device (77) for filtering out the sulfur and then is returned to the circulation loop.

6. Method according to claim 5, characterised in that the quantity of liquid withdrawn from the circulation loop per unit of time is regulated as a function of the quantity of gas fed per unit of time.

7. Apparatus for carrying out the method according to one of the claims 1 to 6, comprising at least one reactor chamber (11) with a gas inlet (15) and a gas outlet (17), a first pump (45) and a spraying device (19) for distributing liquid in the reactor chamber (11), a storage vessel (27), a oxydation vessel (59), a second pump (55) for feeding of liquid to be regenerated from the storage vessel (27) to the oxydation vessel (59), a gas compressor (63) to feed air or oxygen into the oxydation vessel (59) and for maintaining a predetermined pressure in said vessel, a third pump for circulating the liquid in the oxydation vessel (59), a filter device (77) for removing sulfur from the oxydation vessel, a conduit (68) for recirculation of liquid from the oxydation vessel (59) into the reactor chamber, and a relaxation device (69) for pressure relaxation of the of the liquid prior to its recirculation into the reactor chamber (11).

8. Apparatus according to claim 7, characterised in that the relaxation device (69) comprises at least one relaxation column, which at the bottom is connected to the oxydation vessel (59) and has an outlet (70) at the top, by way of which the regenerated liquid can flow directly, or via the storage container (27) to the reactor chamber (11).

9. Apparatus according to claim 8, characterised in that a suction line (75) for sulfur foam extends from the pressure relaxation column to the oxydation vessel or to the filtering device (77).

10. Apparatus according to one of the claims 7 to 9, characterised in that the storage vessel (27) is divided into two chambers (31, 32) by a partition (30) extending from the the top to near the bottom, and in that the first chamber (31) has an inlet for liquid from the reactor chamber (11), and in that the second chamber (33) is connected to the outlet (70) of the pressure relaxation column (69) and has both an outlet (41) to the reactor chamber (11) and an outlet (53) to the oxydation vessel (59).

11. Apparatus according to claim 10, characterised in that the outlet (41) to the reactor chamber (11) is located at the bottom of the second chamber (33).

12. Apparatus according to claim 11, characterised in that the outlet (53) to the oxydation vessel (59) is located spaced apart from and above the outlet (41) to the reaction chamber (11).

13. Apparatus according to claim 12, characterised in that the outlet (53) to the oxydation vessel (59) is formed by an overflow device.

14. Apparatus according to one of the claims 8 to 13, characterised in that an outlet duct (43) leads from the outlet (70) of the relaxation column (69) to the vicinity of the outlet (41) of the reactor chamber (11).

15. Apparatus according to one of the claims 14, characterised in that the upper portion of the second chamber (33) is connected, e.g. via an opening (48) in the outlet duct (43), to the atmosphere.

16. Apparatus according to one of the claims 7 to 15, comprising a plurality of reactor chambers (11) and/or a plurality of relaxation columns (69), characterised in that a control device (89), valves (51, 91) and flap (25) are provided for connecting or deconnecting reactor chambers (11) and/or relaxation columns (69) according to the amount of gas to be cleaned per unit of time.

17. Apparatus according to one of the claims 7 to 16, characterised in that for distributing the liquid nozzels (61) are provided in the oxydation vessel (59).

18. Apparatus according to one of the claims 7 to 17, characterised in that for regulating the level of liquid in the storage container (27) and/or in the oxydation vessel (59) liquid level sensors (42, 62) are provided.

19. Apparatus according to one of the claims 7 to 18, characterised in that a control valve (80) is provided for controlling the quantity of liquid flowing to the filter (77) per unit of time.

**Revendications**

1. Procédé de désulfuration de gaz contenant de l'acide sulfhydrique, par exemple de gaz de curage, de gaz de digestion, de gaz naturel ou de gaz de charbon, dans lequel le gaz est lavé dans une chambre de transfert de matière avec un liquide circulant en circuit fermé, des composés sulfurés étant formés dans le liquide, le liquide étant aéré, en vue de l'oxydation des composés sulfurés formés, avec de l'air ou de l'oxygène pur dans un récipient maintenu sous une pression qui est supérieure à la pression ambiante, afin d'oxyder les composés sulfurés formés, puis de séparer du liquide le soufre élémentaire ainsi produit, et le liquide débarrassé du soufre étant dégazé et réutilisé pour le lavage du gaz, caractérisé en ce que le liquide régénéré est mis en circulation, par une première pompe (45), depuis un réservoir d'alimentation (27) vers la chambre de transfert de matière (11) et, en retour, vers le réservoir d'alimentation, en ce que le liquide à régénérer est transporté, par une deuxième pompe (55), depuis le réservoir d'alimentation (27) vers un récipient d'oxydation (59) et, après son dégazage, est ramené dans le réservoir d'alimentation (27), et en ce qu'en vue de son aération, le liquide est continuellement recyclé dans le récipient d'oxydation (59) par une troisième pompe (67).

2. Procédé selon la revendication 1, caractérisé en ce que la pression pour l'aération du liquide est d' environ 2 bars.

3. Procédé selon la revendication 1 ou 2, caractérisé en ce qu'au cours de son transport, le liquide est pulvérisé dans l'espace au-dessus du niveau du liquide dans le récipient d'oxydation (59).

4. Procédé selon l'une quelconque des revendications 1 à 3, caractérisé en ce que l'aération est effectuée dans un récipient d'oxydation cylindrique couché (59) qui est rempli de liquide pratiquement jusqu'à la moitié.

5. Procédé selon l'une quelconque des revendications 1 à 4, caractérisé en ce qu'une partie du liquide est extraite continuellement du circuit fermé et est envoyée dans un dispositif de filtration (77) pour la séparation du soufre par filtrage, puis est ramenée dans le circuit fermé.

6. Procédé selon la revendication 5, caractérisé en ce que la quantité de liquide extraite du circuit fermé par unité de temps est réglée en fonction de la quantité de gaz transportée par unité de temps.

7. Dispositif pour l'exécution du procédé selon l'une quelconque des revendications 1 à 6, comprenant au moins une chambre de transfert de matière (11) avec une entrée de gaz (15) et une sortie de gaz (17), une première pompe (45) et un dispositif de pulvérisation (19) pour répartir le liquide dans la chambre de transfert de matière (11), un réservoir d'alimentation (27), un récipient d'oxydation (59), une deuxième pompe (55) pour le transport de liquide à régénérer depuis le réservoir d'alimentation (27) vers le récipient d'oxydation (59), un compresseur à gaz (63) pour l'introduction d'air ou d'oxygène pur dans le récipient d'oxydation (59) et pour le maintien d'une pression prédéterminée dans ce dernier, une troisième pompe pour le recyclage du liquide dans le récipient d'oxydation (59), un dispositif de filtration (77) pour l'élimination du soufre à partir du récipient d'oxydation, une conduite (68) pour ramener du liquide dans la chambre de transfert de matière à partir du récipient d'oxydation (59), et un dispositif de détente (69) pour détendre le liquide avant qu'il ne soit renvoyé dans la chambre de transfert de matière (11).

8. Dispositif selon la revendication 7, caractérisé en ce que le dispositif de détente (69) comporte au moins une colonne de détente qui est raccordée par le bas au récipient d'oxydation (59) et qui présente en haut un orifice de décharge (70) par lequel le liquide régénéré peut s'écouler, directement ou par l'intermédiaire du réservoir d'alimentation (27), dans la chambre de transfert de matière (11).

9. Dispositif selon la revendication 8, caractérisé en ce qu'une conduite d'aspiration (75) pour la mousse de soufre s'étend depuis la colonne de détente jusqu'au récipient d'oxydation (59) ou jusqu'au dispositif de filtration (77).

10. Dispositif selon l'une quelconque des revendications 7 à 9, caractérisé en ce que le réservoir d'alimentation (27) est divisé en deux chambres (31, 33) par une cloison (30) qui s'étend jusqu'à proximité du fond, en ce que la première chambre (31) présente une admission (15) pour du liquide en provenance de la chambre de transfert de matière (11), et en ce que la seconde chambre (33) est raccordée à l'orifice de décharge (70) de la colonne de détente (69) et comporte une sortie (41) vers la chambre de transfert de matière (11) et une sortie (53) vers le récipient d'oxydation (59).

11. Dispositif selon la revendication 10, caractérisé en ce que la sortie (41) vers la chambre de transfert de matière (11) est disposée en bas dans la seconde chambre (33).

12. Dispositif selon la revendication 10 ou 11, caractérise en ce que la sortie (53) vers le récipient d'oxydation (59) est disposée à distance de la sortie (41) vers la chambre de transfert de matière (11) et au-dessus de cette sortie (41).

13. Dispositif selon la revendication 12, caractérisé en ce que la sortie (53) vers le récipient d'oxydation est constituée par un orifice de trop-plein.

14. Dispositif selon l'une quelconque des revendications 8 à 13, caractérisé en ce qu'à partir de l'orifice de décharge (70) de la colonne de détente (69), un tuyau de descente (43) s'étend jusqu'à proximité de la sortie (41) vers la chambre de transfert de matière (11).

15. Dispositif selon l'une quelconque des revendications 10 à 14, caractérisé en ce que la partie supérieure de la seconde chambre (33) est en communication avec l'atmosphère, par exemple par une ouverture (48) dans le tuyau de descente (43).

16. Dispositif selon l'une quelconque des revendications 7 à 15, comprenant plusieurs chambres de transfert de matière (11) et/ou plusieurs colonnes de détente (69), caractérisé en ce qu'il est prévu un dispositif de commande (89), des valves (51, 91) et des volets de fermeture (25) pour mettre en service ou hors service des chambres de transfert de matière (11) et/ou des colonnes de détente (69) en fonction de la quantité de gaz à purifier par unité de temps.

17. Dispositif selon l'une quelconque des revendications 7 à 16, caractérisé en ce que des buses (61) sont disposées dans le récipient d'oxydation (59) pour répartir le liquide.

**18.** Dispositif selon l'une quelconque des revendications 7 à 17, caractérisé en ce que des détecteurs de niveau (46, 62) sont prévus pour le réglage du niveau de liquide dans le réservoir d'alimentation (27) et/ou dans le récipient d'oxydation (59).

**19.** Dispositif selon l'une quelconque des revendications 7 à 18, caractérisé en ce qu'une valve de commande (80) est prévue pour le réglage de la quantité de liquide qui s'écoule vers le filtre (77) par unité de temps.